# EUROPEAN PATENT SPECIFICATION

(11) **EP 3 887 811 B1**
(45) Date of publication and mention of the grant of the patent: **11.10.2023**
(21) Application number: 19845780.6
(22) Date of filing: 26.11.2019
(51) Int. Cl.: G01N 27/04

(54) **METHOD AND APPARATUS FOR CHECKING THE ELECTRICAL CONDUCTIVITY OF TYRES FOR VEHICLE WHEELS**
VERFAHREN UND VORRICHTUNG ZUR ÜBERPRÜFUNG DER ELEKTRISCHEN LEITFÄHIGKEIT VON REIFEN FÜR FAHRZEUGRÄDER
PROCEDE ET APPAREIL DE CONTROLE DE LA CONDUCTIVITE ELECTRIQUE DE PNEUS POUR ROUES DE VEHICULES

(30) Priority: 29.11.2018 IT 201800010679
(43) Date of publication of application: 06.10.2021
(73) Proprietor: Pirelli Tyre S.p.A., 20126 Milano (IT)
(72) Inventor: D'ORIA, Francesco, 20133 Milan (IT); HELD, Alessandro, 20126 Milan (IT); ROBERTI, Lorenzo, 20126 Milano (IT)
(74) Representative: PGA S.p.A.
(86) International application number: PCT/IB2019/060176
(87) International publication number: WO 2020/109995

(56) References cited:
- JP-A- 2017 110 958
- US-A1- 2009 072 842
- US-A1- 2015 241 491

## Description

### Technical field of the invention

The present invention relates to a method and apparatus for checking the electrical conductivity of tyres for vehicle wheels. The present invention falls within the field of processes and apparatuses for checking tyres for vehicle wheels.

A tyre for vehicle wheels generally comprises a carcass structure comprising at least one carcass ply having end flaps engaged with respective annular anchoring structures. A belt structure is associated in a radially external position to the carcass structure, comprising one or more belt layers, arranged in radial superposition with respect to each other and with respect to the carcass ply, having textile or metallic reinforcing cords with crossed orientation and/or substantially parallel to the circumferential development direction of the tyre. A tread band is applied in a position radially external to the belt structure, also made of elastomeric material like other semi-finished products making up the tyre. The assembly of at least said belt structure and said tread band form the crown structure of the tyre. Respective sidewalls of elastomeric material are further applied on the lateral surfaces of the carcass structure, each extending from one of the lateral edges of the tread band up at the respective annular anchoring structure to the beads. In "tubeless" tyres, the carcass ply is internally coated by a preferably butyl-based layer of elastomeric material, usually called "liner" having optimal airtight characteristics and extending from one to the other of the beads. The production cycles of a tyre provide for a building process in which the various structural components of the tyre are made and/or assembled on one or more drums. The built green tyres are transferred to a moulding and vulcanisation line where a moulding and vulcanisation process is carried out to define the structure of the tyre according to a desired geometry and tread pattern.

### Definitions

"Tyre", when not otherwise specified, means both a green tyre and a moulded and vulcanised tyre.

The terms "radial" and "axial" and the expressions "radially internal/external" and "axially internal/external" are used referring to a direction perpendicular and a direction parallel to a tyre rotation axis, respectively.

The terms "circumferential" and "circumferentially" are instead used with reference to the annular development direction of the tyre.

By "substantially aligned with each other along a radial direction of the tyre" it is meant that mutually aligned elements, in this specific case the electrodes which will be introduced later, lie in the same radial direction or are angularly offset with respect to each other by an angle smaller than 20°, preferably smaller than 10°, i.e. the two radial directions passing through the two elements define an angle smaller than 20°, preferably smaller than 10°.

### Prior art

Document EP1887367 illustrates a device provided with first electrodes resting against a plurality of portions of a radially external surface of the tyre and with a second electrode placed in contact with an internal peripheral zone of the tyre itself for measuring an electrical resistance value between the tread and a bead of said tyre.

Document JP2017110958 discloses a radially external electrode defined by a plate provided with a plurality of conductive portions in contact with a radially external portion of the tyre and an internal electrode which is electrically connected to a radially internal portion of the tyre itself.

US20150241491 discloses a device for measuring the electrical resistance of a tyre provided with an external electrode probe configured to rest against a portion of the tyre tread and an internal electrode configured to rest against a portion of a tyre bead. A predetermined measurement current is applied between the external electrode and the internal electrode and a measuring instrument detects a voltage and measures the electrical resistance between the probes.

### Summary

Modern tyres, even the best performing ones with a tread containing a high percentage of silica that gives them good handling but high electrical resistance, must allow discharging to earth the electrostatic charge due to the difference in potential between the vehicle and the ground, to avoid the generation of discharges that could cause serious damage, for example during refuelling, or even just to avoid annoying shocks to people who touch the vehicle. In this context, the Applicant has felt the need to improve the technical solutions of the type illustrated in EP1887367, JP2017110958, US20150241491.

The Applicant has in fact observed that the aforementioned solutions do not allow a complete verification of the tyre.

In particular, the checks carried out according to the aforementioned solutions do not allow ensuring with certainty that the tyre mounted on a vehicle will discharge static electricity whatever the portion of the tread that rests on the ground when the vehicle is stationary.

In fact, the device illustrated in EP1887367 detects an average electrical conductivity between the tread and the bead of the whole tyre.

JP2017110958 and US20150241491 perform a check on a limited portion of the tread band.

It is therefore possible that there are areas of the tread that do not conduct at all but that the aforementioned solutions are unable to detect.

The Applicant has also verified that the devices of the type shown above enable the aforementioned checks to be carried out in relatively long times not compatible with the cycle times of a tyre production line, so it is not possible to check all the tyres or at least a good part of those produced.

The Applicant has therefore perceived the need to be able to check the electrical conductivity of vehicle wheel tyres in a more precise and complete manner, so that tyres deemed suitable after such a check pass the tests imposed by the regulations and, above all, once mounted on the vehicle they discharge static electricity when the vehicle is stationary.

The Applicant has also perceived the need to perform this check more quickly, such as to extend it to a large percentage of the tyres produced and/or to be carried out in line during or at the end of production.

The Applicant has found that the necessary speed and completeness can be obtained by carrying out the check on the tyre not mounted on a rim (therefore not inflated), applying thereto a plurality of pairs of electrodes spaced apart from each other.

According to a first aspect, the present invention relates to a method for checking the electrical conductivity of tyres for vehicle wheels according to claim 1.

According to a second aspect, the present invention relates to an apparatus for checking the electrical conductivity of tyres for vehicle wheels according to claim 8.

According to a further aspect, the present disclosure relates to a process for making tyres comprising the method according to the first aspect.

According to a different aspect, the present disclosure relates to a plant for making tyres comprising at least one apparatus for checking the electrical conductivity of tyres for vehicle wheels according to the second aspect.

The Applicant believes that the present invention allows improving the quality of the tyres produced, with particular reference to their conductive properties, so as to offer maximum safety to the end user in terms of dissipation of the electrostatic charge of the vehicle.

In particular, the Applicant believes that the present invention allows improving the verification of the electrical conductivity of the tyres in terms of completeness, precision, repeatability, accuracy and speed. In fact, the plurality of pairs of electrodes allows checking the conductivity of a plurality of angular portions of the tyre.

The Applicant also believes that the present invention also allows integrating such a verification in the production line or immediately downstream thereof and executing it on a high percentage of the tyres produced.

The present invention, in at least one of the above aspects thereof, can exhibit one or more of the following preferred features.

Preferably, the tyre is vulcanised.

Alternatively, the tyre is green.

Preferably, during the generation of the voltage and the attainment of said value of the electrical resistance, the tyre is deflated.

Preferably, during the generation of the voltage and the attainment of said value of the electrical resistance, the tyre is not mounted on a rim or similar element. Preferably, during the voltage generation and the obtaining of said electrical resistance value, the tyre and the plurality of pairs of electrodes are stationary with respect to each other. In other words, the pairs of electrodes are placed in contact with specific portions of the tyre and do not move with respect to the tyre during the verification of the electrical resistance/conductivity. This solution allows detecting the electrical resistance/conductivity of specific portions of the tyre and also simplifying the structure of the checking apparatus with respect to known solutions in which the tyre and/or the electrode is/are rotated.

Preferably, the pairs of electrodes are angularly equidistant from each other.

Preferably, the pairs of electrodes are at least three.

Preferably, the pairs of electrodes are at least six.

Preferably, the pairs of electrodes are spaced apart by an angle less than or equal to 120°.

Preferably, the pairs of electrodes are spaced apart by an angle less than or equal to 60°.

Preferably, the pairs of electrodes are multiples of three. In this way, it is possible to decide to use only three at 120° or six at 60° or a higher number. Three electrodes at 120° is the optimal configuration as a compromise between completeness of measurement and simplicity and economy of the apparatus. In fact, when the tyre is mounted on a vehicle it is very likely that one of the three 120° portions is placed at the footprint of the tyre on the ground.

Preferably, the radially external electrode and the radially internal electrode of each pair lie on the same radial direction. Preferably, the radially external electrode and the radially internal electrode of each pair are angularly offset with respect to each other by an angle.

Preferably, said angle is less than 20°, preferably less than 10°. In other words, two radial directions passing respectively by the radially external electrode and by the radially internal electrode define an angle smaller than 20°, preferably smaller than 10°.

Preferably, the radially external electrode is vertical with respect to the support surface of a sidewall of the tyre, while the radially internal electrode is inclined by an angle of between about 5 and about 25 degrees with respect to the aforementioned vertical (between about 65 and about 85 degrees with respect to the aforementioned support surface). In this way, the radially internal electrode "copies" the bead of the tyre close to the aforementioned support surface. Preferably, the electrical resistance between each pair of electrodes is obtained independently of the other/s pair/s of electrodes. The value of the resistance obtained is that between each pair of electrodes and not that between an internal electrode of a pair and an external electrode of a different pair.

Preferably, it is provided to generate the voltage and obtain the electrical resistance value between one pair of electrodes at a time. The measurements are in that case made in series. In this case, since during a measurement between a pair of electrodes the other pairs of electrodes are not supplied, this measurement of the respective portion of tyre is not affected by voltages/currents generated by the other pairs and is therefore more precise.

Preferably, a single device for obtaining electrical resistance values is operatively connected to all the pairs of electrodes.

Preferably, an electric circuit is operatively associated with the single device to obtain electrical resistance values and to all pairs of electrodes.

Preferably, the electrical circuit is configured to generate the voltage and obtain said electrical resistance value between one pair of electrodes at a time. Preferably, a plurality of devices is provided for obtaining electrical resistance values, each operatively connected to a respective pair of electrodes. Alternatively, it is provided to generate the voltage and simultaneously obtain said value of the electrical resistance between all the pairs of electrodes, preferably through the plurality of devices to obtain electrical resistance values, each operatively coupled to a respective pair of electrodes. In this case, the measurement time is shorter.

Preferably, the voltage is fixed or variable.

Preferably, the voltage is between 0 and 5000V.

Preferably, an electric power is between 0 and 5W, more preferably equal to 3W. Preferably, it is provided to obtain said value of electrical resistance between each pair of electrodes over a measurement time.

Preferably, said measurement time is between 2s and 30s, more preferably between 3s and 10s.

Preferably, it is provided to derive a curve of the electrical resistance/conductivity over the measurement time for each pair of electrodes and for each portion of the tyre corresponding to each pair of electrodes.

Preferably, it is provided to derive a value of the electrical resistance/conductivity over the measurement time for each pair of electrodes and for each portion of the tyre corresponding to each pair of electrodes.

Preferably, it is provided to compare the curve and/or the value of the resistance/conductivity with a reference curve and/or a value and establish, through said comparison, whether the curve and/or the value obtained for the respective portion is/are acceptable.

Preferably, the reference electrical resistance value (measured at room temperature) below which the conductivity for a vulcanised tyre is acceptable (i.e. the portion of the tyre conducts) is about 100 MΩ.

Preferably, the reference electrical resistance value (measured at room temperature) below which the conductivity for a green tyre is acceptable (i.e. the portion of the tyre conducts) is about 10 GΩ.

Preferably, the electrical resistance of the tyre as a whole is evaluated as acceptable if all or at least some of the measured portions/pairs of electrodes have a respective acceptable electrical resistance.

Preferably, each of the radially internal electrodes and each of the radially external electrodes comprises a bar.

Preferably, said bar is substantially parallel to the central axis and/or to the axis of rotation.

Preferably, said bar has a circular section.

Preferably, said bar is made of metal, preferably of steel.

Preferably, the bar has a diameter of between 20 mm and 60 mm, more preferably between 25 mm and 40 mm.

The diameter is selected according to the type and size of the tyre to increase the contact footprint.

Preferably, the radially external electrodes of all the pairs of electrodes are approached closer together and symmetrically (with respect to the central axis).

Preferably, the radially internal electrodes of all the pairs of electrodes are moved away from each other simultaneously and symmetrically (with respect to the central axis).

Preferably, once said value of the electrical resistance has been obtained, the plurality of pairs of electrodes is disengaged from the tyre.

Preferably, disengaging the pairs of electrodes comprises: moving away from each other and from the tread the radially external electrodes of all the pairs of electrodes.

Preferably, the radially external electrodes of all the pairs of electrodes are spaced from each other simultaneously and symmetrically (with respect to the central axis).

Preferably, disengaging the pairs of electrodes comprises: approaching one another moving away from the beads of the tyre the radially internal electrodes of all the pairs of electrodes.

Preferably, the radially internal electrodes of all the pairs of electrodes are approached closer together and symmetrically (with respect to the central axis).

Preferably, the pairs of electrodes are movable between an open position and a closed position.

Preferably, in the open position the radially external electrodes of all pairs of electrodes are spaced from each other and the radially internal electrodes of all pairs of electrodes are close to each other.

Preferably, in the closed position the radially external electrodes of all pairs of electrodes are close to each other and the radially internal electrodes of all pairs of electrodes are spaced from each other.

Preferably, the movement devices are part of the support frame or are mounted on the support frame.

Preferably, the movement devices comprise a first synchronization mechanism connected to all the radially external electrodes, to move them synchronously away from each other or in mutual approach.

Preferably, the movement devices comprise a second synchronization mechanism connected to all the radially internal electrodes, to move them synchronously away from each other or in mutual approach.

Preferably, associating the tyre with the plurality of pairs of electrodes comprises: centring the tyre on a support through a thrust exerted by the radially external electrodes and/or by the radially internal electrodes. The electrodes are therefore used to perform the additional centring function.

Preferably, it is provided to press the radially external electrodes against the tread and/or the radially internal electrodes against said at least one bead during the voltage generation and the obtaining of said electrical resistance value. Preferably, during the voltage generation and the obtaining of said electrical resistance value, each of the radially external electrodes and/or the radially internal electrodes exerts a pressure against the tyre.

Preferably, said pressure is greater than 0 bar, more preferably greater than 1 bar. Preferably, said pressure is less than 8 bar, more preferably less than 6 bar.

The electrodes can therefore also be used to apply a load/deformation to the tyre during measurement, so as to simulate the actual load condition of when the tyre is mounted on the vehicle and rests on the ground.

Preferably, the support frame comprises support elements for the tyre made of electrical insulating material, for example Nylon and/or ceramic, wherein the electrical insulating material preferably has an electrical resistivity greater than 10¹³Ωm.

Preferably, the support frame is configured to rest on the ground.

Preferably, the support frame rests fixed on the ground.

Preferably, a measuring station comprises the plurality of pairs of electrodes and, preferably, the support frame.

Preferably, an arrival station is arranged upstream of the measuring station.

Preferably, an unloading station is arranged downstream of the measuring station.

Preferably, it is provided to carry one tyre at a time to an arrival station located upstream of the support frame; transport the tyre from the arrival station to the measuring station; check the electrical conductivity of the tyre in the measuring station; transport the checked tyre to an unloading station located downstream of the measuring station.

Preferably, transporting the tyre comprises: picking the tyre from the arrival station and depositing it in the measuring station.

Preferably, transporting the tyre comprises: picking the tyre from the measuring station and depositing it in the unloading station.

Preferably, a carrier comprises a gripper for gripping the tyre and transporting it between the arrival station and the measuring station and preferably also between the measuring station and the unloading station.

Preferably, a carrier comprises two grippers for gripping two tyres simultaneously, for transporting a first tyre between the arrival station and the measuring station and a second tyre between the measuring station and the unloading station.

Preferably, it is provided to check the electrical conductivity of tyres fed in succession.

Preferably, it is provided to spot check the electrical conductivity of some tyres coming from the plant for making tyres.

Preferably, it is provided to check the electrical conductivity of all the tyres coming from the plant for making tyres.

Preferably, the support frame comprises at least one actuator connected to the pairs of electrodes to move them along a direction parallel to the central axis.

Preferably, the pairs of electrodes are movable between a lowered position and a raised position.

Preferably, in the lowered position, the pairs of electrodes lie below an ideal support surface for the tyre, in which said ideal support surface is preferably defined by the support elements.

Preferably, in the raised position, the pairs of electrodes project beyond the ideal support surface to receive the tyre between the radially internal electrodes and the radially external electrodes.

Preferably, the pairs of electrodes are movable between the open position and the closed position when they are in the raised position.

Preferably, a carrier is present and the support frame is mounted on the carrier.

Preferably, it is provided to support the tyre by the radially external electrodes and the radially internal electrodes.

Preferably, the pairs of electrodes define grippers of the carriers.

In this case, the tyre is supported by the pairs of electrodes and the support elements may not be present.

Preferably, said electrical resistance value is obtained while the tyre is transported by the conveyor.

In an alternative embodiment, the conveyor is a robotic arm, preferably an anthropomorphic robotic arm.

Preferably, the support frame is mounted at a terminal end of the robotic arm.

Preferably, in an embodiment variant, the pairs of electrodes are fixed and associating the tyre with the plurality of pairs of electrodes comprises: fitting/joining the tyre between the radially internal electrodes and the radially external electrodes.

Preferably, it is provided to:
making and/or assembling structural components of a tyre on one or more drums;
moulding and vulcanising the tyre.

Preferably, a tyre production line is provided comprising a building apparatus for building green tyres and at least one moulding and vulcanisation unit operatively arranged downstream of the building apparatus.

Further features and advantages will become apparent from the detailed description of preferred but non-exclusive embodiments of a method and an apparatus for checking the electrical conductivity of tyres for vehicle wheels according to the present invention.

### Description of the drawings

Such description is given hereinafter with reference to the accompanying drawings, provided only for illustrative and, therefore, non-limiting purposes, in which:
- figure 1 is a side elevation view of an apparatus for checking the electrical conductivity of tyres for vehicle wheels according to the present invention;
- figure 2 is the apparatus of figure 1 in a different operating configuration;
- figure 3 is the apparatus of figure 1 in a further operating configuration;
- figure 4 is a schematic top view of the apparatus of the previous figures;
- figure 5 is a schematic top view of a variant of the apparatus according to the present invention;
- figure 6 is a schematic top view of a further embodiment variant of the apparatus according to the present invention;
- figure 7 shows a different embodiment of the apparatus according to the present invention;
- figure 8 shows a further embodiment of the apparatus according to the present invention;
- figure 9 shows an enlarged portion of the apparatus of figure 1 according to an embodiment variant of the present invention;
- figure 10 shows a graph obtained with the apparatus according to the present invention;
- figure 11 is a radial half-section of a tyre checked in the apparatus of figures 1 - 9.

### Detailed description

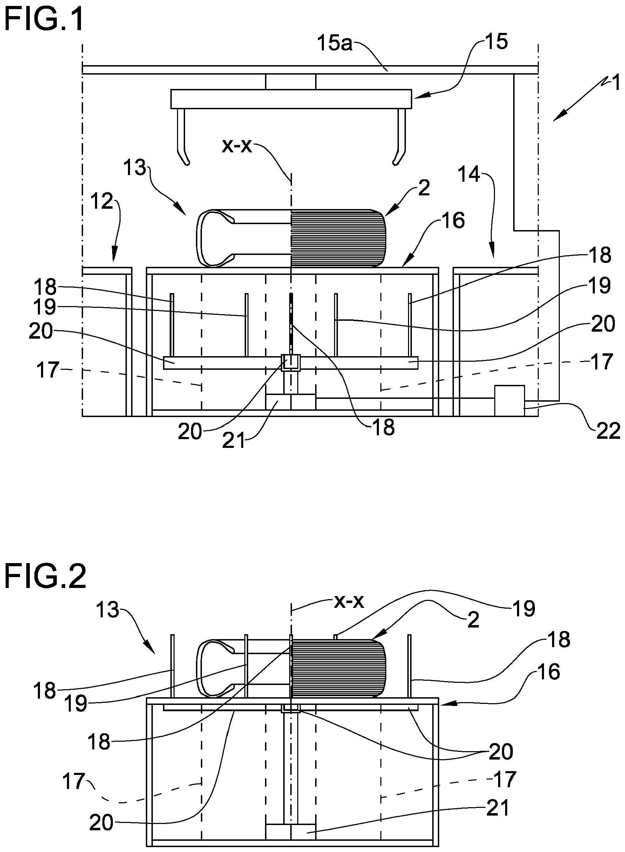

With reference to figure 1, reference numeral 1 globally indicates an apparatus for checking the electrical conductivity of tyres 2 for vehicle wheels. The apparatus may be part of a plant, not shown as a whole, for manufacturing tyres for vehicle wheels or be placed downstream of said plant or be a stand-alone station.

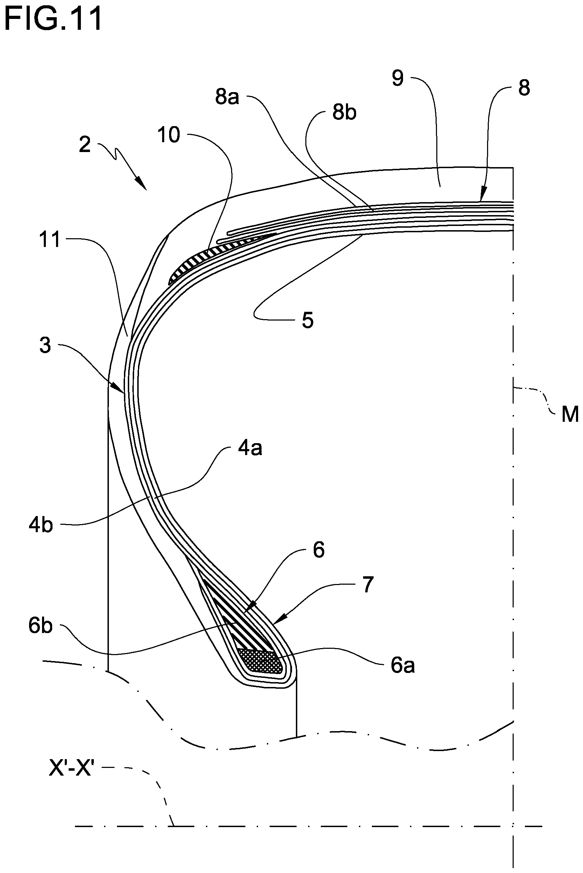

A tyre 2 is for example shown in figure 11 and essentially comprises a carcass structure 3 having one/two carcass plies 4a/4a, 4b. A layer of impermeable elastomeric material or so-called liner 5 is applied in a radially internal position to the carcass ply 4a/4a, 4b. Two annular anchoring structures 6 comprising each a so-called bead core 6a bearing an elastomeric filler 6b in radially external position are engaged to respective end flaps of the carcass ply or plies 4a/4a, 4b. The annular anchoring structures 6 are integrated in the proximity of zones usually identified by the name of "beads" 7, at which the engagement between tyre 2 and a respective mounting rim usually occurs. A belt structure 8 comprising for example belt layers 8a, 8b is circumferentially applied around the carcass ply/plies 4a/4a, 4b, and a tread band 9 is circumferentially overlapped to the belt structure 8. The belt structure 8 may be associated with so-called "under-belt inserts" 10 placed each between the carcass ply/plies 4a/4a, 4b and one of the axially opposite end edges of the belt structure 8. Two sidewalls 11, extending each from the respective bead 7 to a corresponding lateral edge of the tread band 9, are applied in axially opposite positions on the carcass ply/plies 4a/4a, 4b. The portion of each sidewall 11 close to the lateral edge of the tread band 9 is known as the tyre shoulder. The tyre 2 has a plane of symmetry "M" (figure 11) equidistant from the respective beads 7 and perpendicular to its rotation axis "X'-X"', when the tyre is in service.

The plant, not shown, comprises a tyre production line 2 formed by an apparatus for building green tyres and at least one moulding and vulcanisation unit operatively arranged downstream of the building apparatus. In a preferred but not exclusive embodiment, the apparatus for building green tyres comprises a carcass building line at which forming drums are moved between different stations arranged to form, on each forming drum, the carcass structure 3 comprising for example the carcass plies 4a, 4b, the liner 5, the annular anchoring structures 6 and possibly at least a part of the sidewalls 11. At the same time, in a crown building line, one or more forming drums are sequentially moved between different work stations arranged to form a crown structure on each forming drum, comprising at least the belt structure 8, the tread band 9, and possibly at least a part of the sidewalls 11. In an assembly station, the crown structure is coupled to the carcass structure 3.

In the exemplary embodiment illustrated in figure 1, the apparatus 1 for checking the electrical conductivity comprises an arrival station 12, a measuring station 13 located downstream of the arrival station 12 and an unloading station 14 located downstream of the measuring station 13.

A vulcanised tyre 2 is carried from the plant for building tyres up to the arrival station 2, for example picked from the plant in a random manner to perform a sample check. According to a variant, it is provided to check the electrical conductivity of all the tyres 2 coming from the plant and fed in succession into the arrival station 12.

The tyre 2 deposited in the arrival station 12 is free, i.e. it is not mounted on a rim, and is deflated.

The arrival station 12 comprises for example a motorised roller conveyor and moves the tyre 2, which rests on its own sidewall 11, towards the measuring station 13. Alternatively, as shown in figure 1, the apparatus 1 comprises a gripper 15 which is movable along a guide 15a and picks the tyre 2 from the arrival station 12 and places it in the measuring station 13.

The measuring station 13 comprises a support frame 16 configured to rest fixedly on the ground. The support frame 16 carries a plurality of support elements 17. These support elements 17 are defined by vertical walls distributed as spokes with respect to a central axis "X-X" of the measuring station 13 and made of electrical insulating material, such as for example Nylon and/or ceramic with an electrical resistivity greater than 10¹³Ωm. In figures 1, 2 and 3 for reasons of clarity said support elements 17 have been shown with a broken line. A sidewall 11 of the tyre 2 rests on upper edges of these vertical walls which define an ideal support surface for said tyre 2.

The measuring station 13 comprises a plurality of electrode pairs. In the embodiments of figures 1, 2, 3, 4, 7 and 8 the pairs are four. Each pair of electrodes comprises a radially external electrode 18 and a radially internal electrode 19 (with respect to radial directions to the central axis X-X).

The pairs of electrodes are supported and moved by movement devices for example part of the support frame 16.

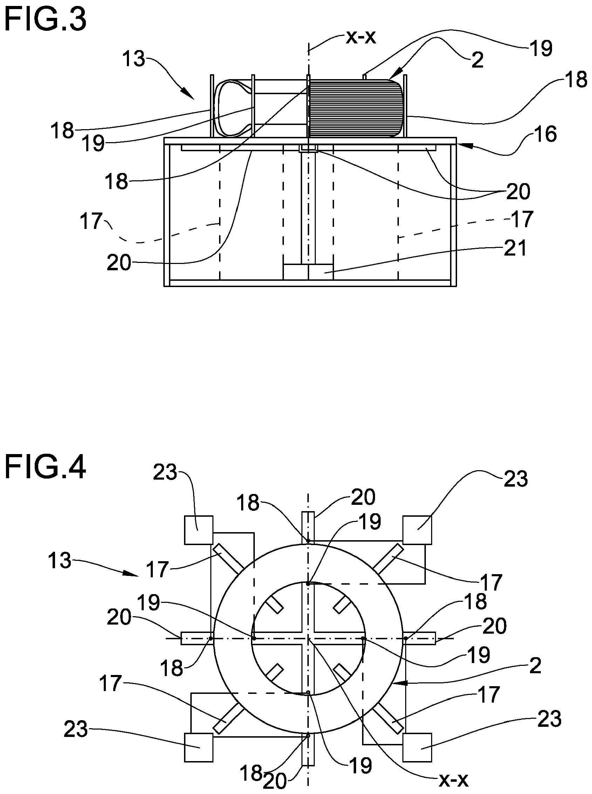

The movement devices are configured to move the radially external electrodes 18 and the radially internal electrodes 19 of all the pairs of electrodes between an open position and a closed position. In the open position the radially external electrodes 18 of all pairs of electrodes are spaced from each other and the radially internal electrodes 19 of all pairs of electrodes are close to each other (figure 2). In the closed position the radially external electrodes 18 of all pairs of electrodes are close to each other and the radially internal electrodes 19 of all pairs of electrodes are spaced from each other (figures 3, 4, 5, 6). The movement devices comprise a first synchronization mechanism, not shown, connected to all the radially external electrodes 18, to move them synchronously away from each other or in mutual approach. The movement devices further comprise a second synchronization mechanism, not shown, connected to all the radially internal electrodes 19, to move them synchronously away from each other or in mutual approach.

The movement devices are further configured to move all the pairs of electrodes jointly between a lowered position and a raised position. In the lowered position (figure 1), the pairs of electrodes lie below the ideal support surface for the tyre 2. In the raised position (figures 2 and 3), the pairs of electrodes project beyond the ideal support surface to receive the tyre 2 between the radially internal electrodes 19 and the radially external electrodes 18.

In the embodiment illustrated in figures 1 to 4, the movement devices comprise four radial arms 20 angularly equally spaced from each other by 90° and mounted on an actuator 21 movable vertically, i.e. along a direction parallel to the central axis "X-X" . The actuator 21 is configured to move the arms 20 and then the pairs of electrodes between the lowered position of figure 1 and the raised position of figures 2 and 3.

Each pair of electrodes is mounted on a respective radial arm 20 and mechanisms not shown and associated with the radial arms 20 are configured to move the pairs of electrodes between the open position of figure 2 and the closed position of figures 3 and 4. The radially external electrode 18 and the radially internal electrode 19 of each pair of electrodes are substantially aligned with each other along a radial direction defined by the respective arm 20. Said radially external electrode 18 and radially internal electrode 19 of each pair of electrodes can lie in exactly the same radial direction, as in the examples illustrated in the accompanying figures, or may be angularly offset with respect to each other by an angle smaller than 20°, for example by 10°.

The radially external electrodes 18 and the radially internal electrodes 19 of the embodiments of figures 1 to 8 are shaped as vertically arranged bars and translate between the above closed and open position. The bars are made of steel and have a circular section with a diameter for example of between 20 mm and 60 mm, more preferably between 25 mm and 40 mm.

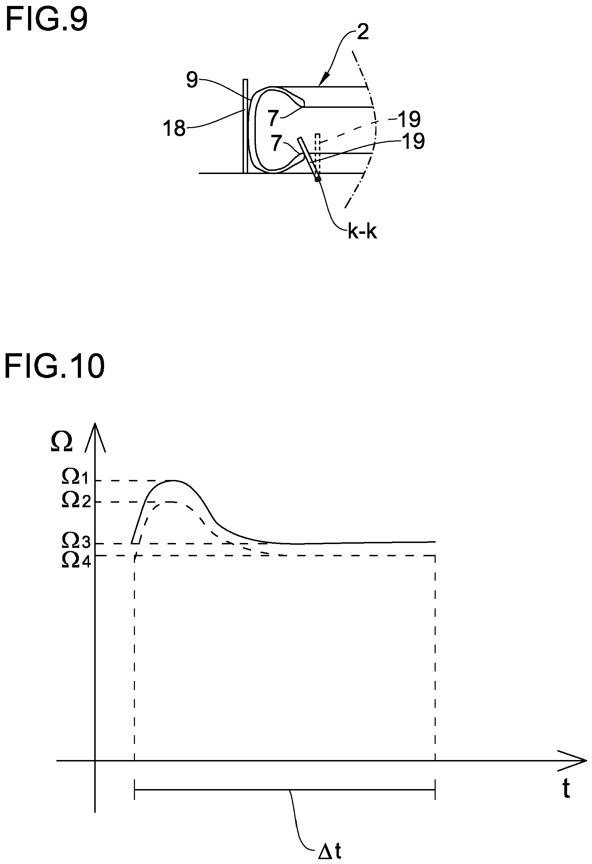

In the embodiment variant of figure 9, the radially external electrode 18 translates radially while the radially internal electrode 19 moves radially by rotating around a respective axis "K-K" tangent to a circumference with centre in the central axis "X-X".

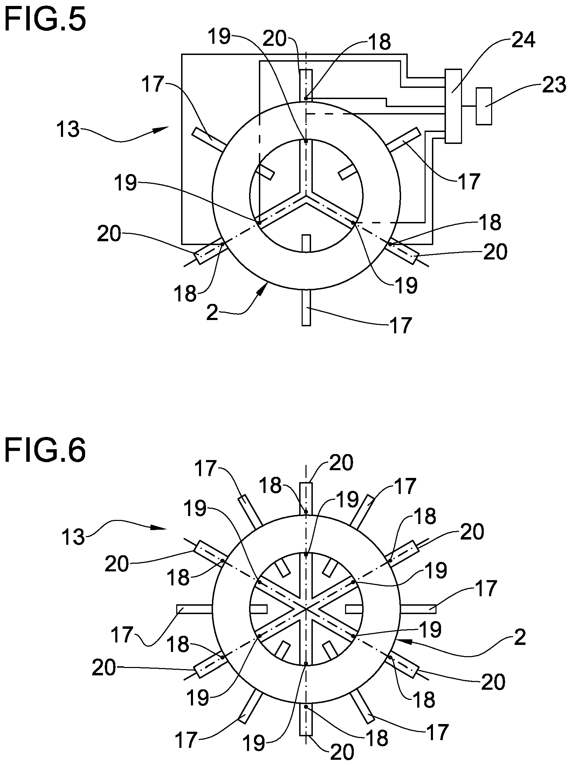

In the embodiment of figure 5, the arms 20 and the pairs of electrodes are three, spaced apart by an angle of 120°. In the embodiment of figure 6, the arms 20 and the pairs of electrodes are six, spaced apart by an angle of 60°. In other variants not shown in detail, the electrode pairs are multiples of three. In this way, it is possible to decide to use only three at 120° or six at 60° or a higher number.

An electronic control unit 22, shown schematically in figure 1, is operatively connected to the gripper 15 and to the movement devices, to control the movements thereof.

In the embodiment of figure 4, a device 23 for obtaining electrical resistance values (for example a tester) is operatively connected to each of the four pairs of electrodes and is preferably configured to generate a voltage between the radially external electrode 18 and the radially internal electrode 19 of the respective pair of electrodes and to measure a value of an electric current intensity between the radially external electrode 18 and the radially internal electrode 19 of each pair of electrodes, finally obtaining an electrical resistance value between each of the above pairs of electrodes. Alternatively, the measured current intensity values are sent to said electronic control unit 22 which calculates the above values of electrical resistance between each of the above pairs of electrodes.

In use and according to a method for checking the electrical conductivity of tyres for vehicle wheels according to the present invention, the gripper 15 lays the tyre 2 in the measuring station 13 resting it on the support elements 17 and with its own axis of rotation "X'-X"' coinciding with or placed in the proximity of the central axis "X-X". During this operation, the pairs of electrodes are in the lowered position and in the open position (figure 1).

After the gripper 15 has released the tyre 2, the electronic control unit 22 controls the actuator 21 and the latter carries the arms 20 and the pairs of electrodes in the raised position while the pairs of electrodes are still in the open position. The tyre 2 is therefore received between the radially internal electrodes 19 and the radially external electrodes 18. The radially internal electrodes 19 are located in a radially internal position with respect to the beads 7 of the tyre 2 and are spaced therefrom. The radially external electrodes 18 are located in a radially external position with respect to the tread band 9 and spaced therefrom (figure 2).

The pairs of electrodes are brought to the closed position, in which each of the radially external electrodes 18 rests against the tread 9 of the tyre 2 and each of the radially internal electrodes 19 rests against one or both beads 7 of the tyre 2.

The radially external electrodes 18 of all pairs of electrodes are approached to each other simultaneously and symmetrically and the radially internal electrodes 19 of all pairs of electrodes are moved away from each other simultaneously and symmetrically.

In the embodiment of figure 3, the radially internal electrodes 19 rest against both beads 7. In the variant of figure 9, the radially internal electrodes 19 rest only against the lower bead 7. In the latter case, the radially internal electrodes 19 are inclined by an angle of between about 65 and about 85 degrees with respect to the above ideal support surface of the tyre 2 (between about 5 and about 25 degrees with respect to a vertical of the above support surface). In this way, each radially internal electrode 19 "copies" the bead of the tyre close to the aforementioned support surface.

During this manoeuvre, the radially external electrodes 18 and/or the radially internal electrodes 19 exert a thrust against the tyre 2 and centre it, if not already centred, with respect to the central axis "X-X". Moreover, even while the pairs of electrodes are in the closed position, the radially external electrodes 18 exert a pressure against the tread band 9 and the radially internal electrodes 19 exert a pressure against the bead or beads 7, so as to simulate a real load condition of when the tyre 2 is mounted on the vehicle and rests on the ground. The pressure applied is a few bars, for example between 1 bar and 6 bar.

While the pairs of electrodes rest and press against the tyre 2 and are stationary with respect to the tyre 2 itself, the devices 23 for obtaining the electrical resistance values are operated in series, for example by the electronic control unit 22, so as to generate the voltage and obtain the electrical resistance between one pair of electrodes at a time. Each of the devices 23 for obtaining the electrical resistance values therefore obtains the electrical resistance of a respective portion of the tyre 2. The electrical resistance between each pair of electrodes and each portion of the tyre 2 is therefore obtained independently of the other pairs of electrodes.

Alternatively, it is provided to generate the voltage and simultaneously obtain the electrical resistance between all electrode pairs. Each of the devices 23 always obtains the electrical resistance of the respective portion of the tyre 2, but this result could be influenced by the voltage generated simultaneously even between the other pairs of electrodes.

In the embodiment of figure 5, there is a single device 23 for obtaining electrical resistance values which is connected to all the pairs of electrodes by means of an electrical circuit 24 and is configured to generate the voltage and obtain the electrical resistance between one pair of electrodes at a time. This electric circuit 24 is provided with switches configured to selectively connect the device 23 to one pair of electrodes at a time. This embodiment variant allows performing only the measurements in series, i.e. to obtain the electrical resistance between one pair of electrodes at a time.

The applied voltage may be fixed or variable and between 0 and 5000V with an electrical power of between 0 and 5W. The voltage is applied and the electrical resistance is obtained for a measurement time "Δt" which may be between 2s and 30s.

From the aforementioned measurement, a curve of the electrical resistance (in Ohm) is obtained in the measurement time "Δt", for example illustrated in figure 10 with a dotted line, for each pair of electrodes and for each portion of the tyre 2. This curve of the electrical resistance obtained is, for example, compared with a reference curve of the electric resistance, illustrated as a continuous line in figure 10. According to a possible evaluation criterion, if the curve obtained is below the reference curve for the entire measurement time "Δt", then the electrical conductivity for the respective portion of the tyre 2 is acceptable.

Instead of comparing the mentioned entire curves, it is provided to obtain and compare a single obtained value of the electrical resistance with a single reference value thereof. For example, the obtained and reference values are the peak values Ω1, Ω2 of the respective curves (figure 10). Alternatively, the obtained and reference value are the substantially constant asymptotic values Ω3, Ω4 that the curves assume after an initial transient (figure 10). For example, the reference value of peak electrical resistance Ω3 (measured at room temperature) below which the conductivity for a portion of a vulcanised tyre 2 is acceptable is about 100 MΩ.

The electrical resistance of the tyre 2 as a whole is evaluated as acceptable if all or at least some of the measured portions/pairs of electrodes have a respective acceptable electrical resistance. For example, if the pairs of electrodes are three or four (figures 4 and 5), so that the electrical resistance of the tyre 2 as a whole is evaluated as acceptable, it is necessary that all the measured portions/pairs of electrodes have an acceptable electrical resistance. If the pairs of electrodes are six (figure 6), so that the electrical resistance of the tyre 2 as a whole is evaluated as acceptable, it is necessary that at least five of the six measured portions/pairs of electrodes have an acceptable electrical resistance.

Once the electrical resistance values have been obtained, the radially external electrodes 18 of all pairs of electrodes are moved away from each other and from the tread 9 simultaneously and symmetrically and the radially internal electrodes 19 of all pairs of electrodes are moved closer together moving them away from the beads 7 of the tyre 2 simultaneously and symmetrically (figure 2). Thus, the radial arms 20 and the electrode pairs are returned to the lowered position of figure 1. The tyre 2 is picked by the gripper 15 and transported to the unloading station 14 located downstream of the measuring station 13. From here, the tyre 2 is sent towards further checks or stored in a warehouse if considered suitable, otherwise it can be discarded.

In an embodiment variant not shown, a carrier comprises two grippers which work simultaneously on two tyres. More precisely, at first a first tyre is transported between the arrival station 12 and the measuring station 13 and a second tyre between the measuring station 13 and the unloading station 14. Subsequently, after having carried out the measurements on the first tyre and having unloaded the second tyre, the two grippers move back by one step and subsequently transport a third tyre from the arrival station 12 to the measuring station 13 and the first tyre from the measuring station 13 to the unloading station 14, the cycle then is repeated.

This method may be part of a process for manufacturing tyres for vehicles wheels in which it is provided to manufacture and/or assemble structural components of a tyre on one or more drums, mould and vulcanise the tyre and then check the electrical conductivity thereof.

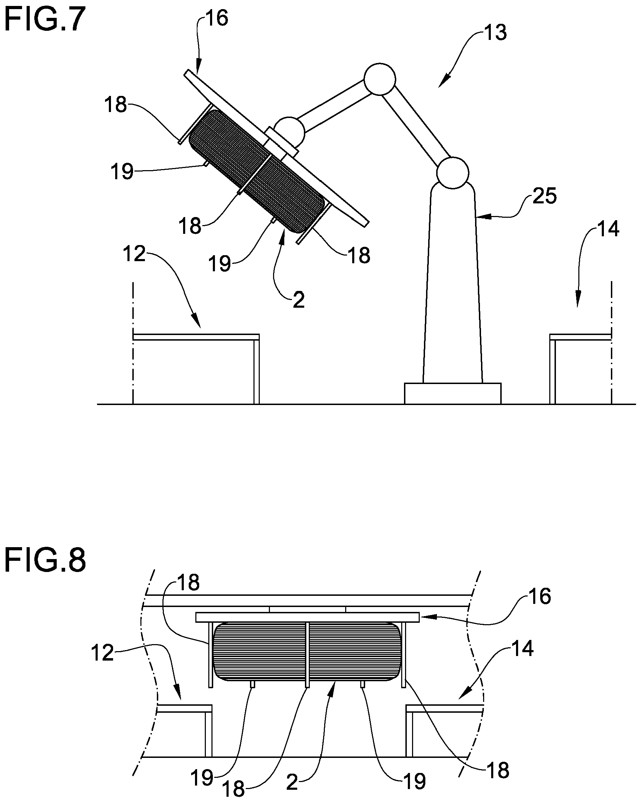

In the different embodiment of figure 7, the measuring station 13 is integrated in an anthropomorphic robotic arm 25, for example with at least five rotation axes, preferably six. The anthropomorphic robotic arm 25 carries, at its own terminal end, the support frame 16 with the radially external electrodes 18 and the radially internal electrodes 19. In this embodiment, the pairs of electrodes also act as grippers and are able to grip and support the tyre 2. Since the tyre 2 is supported by the pairs of electrodes, the support elements may not be present.

The anthropomorphic robotic arm 25 picks the tyre 2 from the arrival station 12 and the apparatus 1 obtains the electric resistance values while the tyre 2 is supported by the anthropomorphic robotic arm 25. Subsequently, the same anthropomorphic robotic arm 25 then deposits the tyre 2 in the unloading station 14. The attainment of electrical resistance values can be carried out while the anthropomorphic robotic arm 25 is stationary or is moving.

In a solution not shown, the arrival station 12 and the unloading station 14 may coincide.

In the further embodiment of figure 8, the support frame 16, with the radially external electrodes 18 and the radially internal electrodes 19, constitute a different type of carrier and measuring device (different from the anthropomorphic robotic arm 25) slidably mounted on the guide 15a. Also in this case, the attainment of electrical resistance values can be carried out while the anthropomorphic robotic arm 25 is stationary or is moving.

In further alternative embodiments not illustrated in detail, the attainment of the electrical resistance values may also be carried out on a green tyre or after building but before the moulding and vulcanisation operations.

## Claims

1. Method for checking the electrical conductivity of tyres for vehicle wheels, comprising:
associating a tyre (2) with a plurality of angularly spaced pairs of electrodes, each pair of electrodes comprising a radially internal electrode (19) and a radially external electrode (18); wherein the radially external electrode (18) rests against a tread (9) of the tyre (2) and the radially internal electrode (19) rests against at least one bead (7) of the tyre (2); wherein the radially external electrode (18) and the radially internal electrode (19) are substantially aligned along a radial direction of the tyre (2);
generating a voltage between the radially external electrode (18) and the radially internal electrode (19) of each pair of electrodes and obtaining an electrical resistance value between the radially external electrode (18) and the radially internal electrode (19) of each pair of electrodes;
wherein associating the tyre (2) with the plurality of pairs of electrodes comprises:
approaching one another and to the tread (9) of the tyre (2) the radially external electrodes (18) of all the pairs of electrodes and/or moving away from each other, and approaching to the beads (7) of the tyre (2), the radially internal electrodes (19) of all the pairs of electrodes.

2. The method of claim 1, wherein, during the voltage generation and the obtaining of said electrical resistance value, the tyre (2) and the plurality of pairs of electrodes are stationary with respect to each other.

3. The method of one of the preceding claims, wherein the electrical resistance value between each pair of electrodes is obtained independently of the other/s pair/s of electrodes.

4. The method of one of the preceding claims, comprising: generating the voltage and obtaining the electrical resistance value between one pair of electrodes at a time.

5. The method of one of the preceding claims, comprising: generating the voltage and obtaining simultaneously the electrical resistance value between all pairs of electrodes.

6. The method of one of the preceding claims, wherein associating the tyre (2) with the plurality of pairs of electrodes comprises: centring the tyre (2) on a support (16) through a thrust exerted by the radially external electrodes (18) and/or by the radially internal electrodes (19).

7. The method of one of the preceding claims, comprising: pressing the radially external electrodes (18) against the tread (9) and/or the radially internal electrodes (19) against said at least one bead (7) during the voltage generation and the obtaining of said electrical resistance value.

8. Apparatus for checking the electrical conductivity of tyres for vehicle wheels, comprising:
a plurality of pairs of electrodes placed around a central axis (X-X) and angularly spaced from each other, each pair of electrodes comprising a radially internal electrode (19) and a radially external electrode (18); wherein the radially internal electrode (19) and the radially external electrode (18) of each pair of electrodes are substantially aligned with each other along a radial direction;
wherein the pairs of electrodes are configured to accommodate a tyre (2) between the radially external electrodes (18) and the radially internal electrodes (19), wherein a rotation axis (X'-X') of the tyre (2) is placed at the central axis (X-X);
at least one device (23) for obtaining electrical resistance values operatively connected to the pairs of electrodes and configured, once said tyre (2) is accommodated between the radially external electrodes (18) and the radially internal electrodes (19) and its own rotation axis (X'-X') is placed at the central axis (X-X), to generate a voltage between the radially external electrode (18) and
the radially internal electrode (19) of each pair of electrodes and to obtain an electrical resistance value between the radially external electrode (18) and the radially internal electrode (19) of each pair of electrodes;
a support frame (16), wherein the pairs of electrodes are mounted on the support frame (16), and movement devices (20, 21) operatively coupled to the pairs of electrodes and configured to radially move the radially external electrodes (18) and/or the radially internal electrodes (19) of all the pairs of electrodes.

9. The apparatus of claim 8, wherein the pairs of electrodes are angularly equidistant from each other.

10. The apparatus of claim 8 or 9, wherein the pairs of electrodes are at least three.

11. The apparatus of claim 8, wherein the pairs of electrodes are movable between an open position, in which the radially external electrodes (18) of all pairs of electrodes are spaced from each other and the radially internal electrodes (19) of all pairs of electrodes are close to each other, and a closed position, in which the radially external electrodes (18) of all pairs of electrodes are close to each other and the radially internal electrodes (19) of all pairs of electrodes are spaced from each other.

12. The apparatus of one of the preceding claims 8 to 11, wherein the movement devices (20, 21) comprise a first synchronization mechanism connected to all the radially external electrodes (18), to move them synchronously away from each other or in mutual approach, a second synchronization mechanism connected to all the radially internal electrodes (19), to move them synchronously away from each other or in mutual approach.

13. The apparatus of one of the claims 8 to 12, wherein each of the radially internal electrodes (19) and each of the radially external electrodes (18) comprises a bar substantially parallel to the central axis (X-X).

14. The apparatus of one of the claims 8 to 13, comprising: one single device (23) for obtaining electrical resistance values operatively connected to all the pairs of electrodes; an electrical circuit (24) operatively coupled to the one single device (23) for obtaining electrical resistance values and to all the pairs of electrodes and configured to generate the voltage and to obtain said electrical resistance value between one pair of electrodes at a time.

15. The apparatus of one of the claims 8 to 13, comprising a plurality of devices (23) for obtaining electrical resistance values, each operatively connected to a respective pair of electrodes.

## Patentansprüche

1. Verfahren zum Prüfen der elektrischen Leitfähigkeit von Reifen für Fahrzeugräder, umfassend:
Zuordnen eines Reifens (2) zu einer Vielzahl von winkelmäßig beabstandeten Paaren von Elektroden, wobei jedes Paar von Elektroden eine radial innere Elektrode (19) und eine radial äußere Elektrode (18) umfasst; wobei die radial äußere Elektrode (18) an einer Lauffläche (9) des Reifens (2) anliegt und die radial innere Elektrode (19) an mindestens einem Wulst (7) des Reifens (2) anliegt; wobei die radial äußere Elektrode (18) und die radial innere Elektrode (19) im Wesentlichen entlang einer radialen Richtung des Reifens (2) ausgerichtet sind;
Erzeugen einer Spannung zwischen der radial äußeren Elektrode (18) und der radial inneren Elektrode (19) jedes Paares von Elektroden und Erhalten eines elektrischen Widerstandswerts zwischen der radial äußeren Elektrode (18) und der radial inneren Elektrode (19) jedes Paares von Elektroden,
wobei das Zuordnen des Reifens (2) zu der Vielzahl von Elektrodenpaaren Folgendes umfasst: das Annähern der radial äußeren Elektroden (18) aller Elektrodenpaare aneinander und an die Lauffläche (9) des Reifens (2) und/oder das Entfernen voneinander, und das Annähern der radial inneren Elektroden (19) aller Elektrodenpaare an die Wülste (7) des Reifens (2).

2. Verfahren nach Anspruch 1, wobei während der Spannungserzeugung und der Ermittlung des elektrischen Widerstandswerts der Reifen (2) und die Vielzahl der Elektrodenpaare in Bezug zueinander stationär sind.

3. Verfahren nach einem der vorhergehenden Ansprüche, wobei der elektrische Widerstandswert zwischen jedem Elektrodenpaar unabhängig von dem/den anderen Elektrodenpaar(en) ermittelt wird.

4. Verfahren nach einem der vorangehenden Ansprüche, wobei die Spannung erzeugt und der elektrische Widerstandswert zwischen jeweils einem Elektrodenpaar ermittelt wird.

5. Verfahren nach einem der vorangehenden Ansprüche, umfassend: Erzeugen der Spannung und gleichzeitiges Ermitteln des elektrischen Widerstandswerts zwischen allen Elektrodenpaaren.

6. Verfahren nach einem der vorhergehenden Ansprüche, wobei das Verbinden des Reifens (2) mit der Vielzahl von Elektrodenpaaren Folgendes umfasst: Zentrieren des Reifens (2) auf einem Träger (16) durch einen von den radial äußeren Elektroden (18) und/oder von den radial inneren Elektroden (19) ausgeübten Druck.

7. Verfahren nach einem der vorhergehenden Ansprüche, umfassend: Pressen der radial äußeren Elektroden (18) gegen die Lauffläche (9) und/oder der radial inneren Elektroden (19) gegen den mindestens einen Wulst (7) während der Spannungserzeugung und des Erhalts des elektrischen Widerstandswerts.

8. Vorrichtung zum Prüfen der elektrischen Leitfähigkeit von Reifen für Fahrzeugräder, umfassend:
eine Vielzahl von Elektrodenpaaren, die um eine zentrale Achse (X-X) herum angeordnet und winkelmäßig voneinander beabstandet sind, wobei jedes Elektrodenpaar eine radial innere Elektrode (19) und eine radial äußere Elektrode (18) umfasst; wobei die radial innere Elektrode (19) und die radial äußere Elektrode (18) jedes Elektrodenpaares entlang einer radialen Richtung im Wesentlichen zueinander ausgerichtet sind;
wobei die Elektrodenpaare so konfiguriert sind, dass sie einen Reifen (2) zwischen den radial äußeren Elektroden (18) und den radial inneren Elektroden (19) aufnehmen, wobei eine Drehachse (X'-X') des Reifens (2) auf der Mittelachse (X-X) angeordnet ist;
mindestens eine Vorrichtung (23) zum Erhalten von elektrischen Widerstandswerten, die operativ mit den Elektrodenpaaren verbunden und dafür konfiguriert ist, sobald der Reifen (2) zwischen den radial äußeren Elektroden (18) und den radial inneren Elektroden (19) untergebracht ist und seine eigene Drehachse (X'-X') auf der Mittelachse (X-X) angeordnet ist, eine Spannung zwischen der radial äußeren Elektrode (18) und der radial inneren Elektrode (19) jedes Elektrodenpaares zu erzeugen und einen elektrischen Widerstandswert zwischen der radial äußeren Elektrode (18) und der radial inneren Elektrode (19) jedes Elektrodenpaares zu ermitteln;
einen Tragrahmen (16), wobei die Elektrodenpaare an dem Tragrahmen (16) angebracht sind, und Bewegungsvorrichtungen (20, 21), die betriebsmäßig mit den Elektrodenpaaren gekoppelt und so konfiguriert sind, dass sie die radial äußeren Elektroden (18) und/oder die radial inneren Elektroden (19) aller Elektrodenpaare radial bewegen.

9. Vorrichtung nach Anspruch 8, wobei die Elektrodenpaare in gleichem Winkelabstand zueinander angeordnet sind.

10. Vorrichtung nach Anspruch 8 oder 9, wobei die Elektrodenpaare mindestens drei sind.

11. Vorrichtung nach Anspruch 8, wobei die Elektrodenpaare zwischen einer offenen Position, in der die radial äußeren Elektroden (18) aller Elektrodenpaare voneinander beabstandet sind und die radial inneren Elektroden (19) aller Elektrodenpaare nahe beieinander liegen, und einer geschlossenen Position, in der die radial äußeren Elektroden (18) aller Elektrodenpaare nahe beieinander liegen und die radial inneren Elektroden (19) aller Elektrodenpaare voneinander beabstandet sind, beweglich sind.

12. Vorrichtung nach einem der vorhergehenden Ansprüche 8 bis 11, wobei die Bewegungsvorrichtungen (20, 21) Folgendes umfassen: einen ersten Synchronisationsmechanismus, der mit allen radial äußeren Elektroden (18) verbunden ist, um sie synchron voneinander weg oder in gegenseitige Annäherung zu bewegen, und einen zweiten Synchronisationsmechanismus, der mit allen radial inneren Elektroden (19) verbunden ist, um sie synchron voneinander weg oder in gegenseitige Annäherung zu bewegen.

13. Vorrichtung nach einem der Ansprüche 8 bis 12, wobei jede der radial inneren Elektroden (19) und jede der radial äußeren Elektroden (18) einen im Wesentlichen parallel zur Mittelachse (X-X) verlaufenden Stab aufweist.

14. Vorrichtung nach einem der Ansprüche 8 bis 13, umfassend: eine einzige Vorrichtung (23) zum Erhalten elektrischer Widerstandswerte, die betriebsmäßig mit allen Elektrodenpaaren verbunden ist; eine elektrische Schaltung (24), die betriebsmäßig mit der einzigen Vorrichtung (23) zum Erhalten elektrischer Widerstandswerte und mit allen Elektrodenpaaren gekoppelt und dafür konfiguriert ist, die Spannung zu erzeugen und den elektrischen Widerstandswert zwischen jeweils einem Elektrodenpaar zu erhalten.

15. Vorrichtung nach einem der Ansprüche 8 bis 13, die eine Vielzahl von Vorrichtungen (23) zum Erhalten von elektrischen Widerstandswerten umfasst, von denen jede betriebsmäßig mit einem jeweiligen Elektrodenpaar verbunden ist.

## Revendications

1. Procédé pour contrôler la conductivité électrique de pneus pour des roues de véhicule, comprenant :
l'association d'un pneu (2) à une pluralité de paires angulairement espacées d'électrodes, chaque paire d'électrodes comprenant une électrode radialement interne (19) et une électrode radialement externe (18) ; dans lequel l'électrode radialement externe (18) repose contre une bande de roulement (9) du pneu (2) et l'électrode radialement interne (19) repose contre au moins un talon (7) du pneu (2) ; dans lequel l'électrode radialement externe (18) et l'électrode radialement interne (19) sont sensiblement alignées le long d'une direction radiale du pneu (2) ;
la génération d'une tension entre l'électrode radialement externe (18) et l'électrode radialement interne (19) de chaque paire d'électrodes et l'obtention d'une valeur de résistance électrique entre l'électrode radialement externe (18) et l'électrode radialement interne (19) de chaque paire d'électrodes ;
dans lequel l'association du pneu (2) à la pluralité de paires d'électrodes comprend : le rapprochement, les unes des autres, et de la bande de roulement (9) du pneu (2), des électrodes radialement externes (18) de toutes les paires d'électrodes et/ou le déplacement les unes à l'opposé des autres, et le rapprochement, des talons (7) du pneu (2), des électrodes radialement internes (19) de toutes les paires d'électrodes.

2. Procédé selon la revendication 1, dans lequel, durant la génération de tension et l'obtention de ladite valeur de résistance électrique, le pneu (2) et la pluralité de paires d'électrodes sont stationnaires les uns par rapport aux autres.

3. Procédé selon l'une des revendications précédentes, dans lequel la valeur de résistance électrique entre chaque paire d'électrodes est obtenue indépendamment de l'autre/des autres paire/s d'électrodes.

4. Procédé selon l'une des revendications précédentes, comprenant : la génération de la tension et l'obtention de la valeur de résistance électrique entre une paire d'électrodes à la fois.

5. Procédé selon l'une des revendications précédentes, comprenant : la génération de la tension et l'obtention simultanée de la valeur de résistance électrique entre toutes les paires d'électrodes.

6. Procédé selon l'une des revendications précédentes, dans lequel l'association du pneu (2) à la pluralité de paires d'électrodes comprend : le centrage du pneu (2) sur un support (16) par l'intermédiaire d'une poussée exercée par les électrodes radialement externes (18) et/ou par les électrodes radialement internes (19).

7. Procédé selon l'une des revendications précédentes, comprenant : la pression des électrodes radialement externes (18) contre la bande de roulement (9) et/ou des électrodes radialement internes (19) contre ledit au moins un talon (7) durant la génération de tension et l'obtention de ladite valeur de résistance électrique.

8. Appareil pour contrôler la conductivité électrique de pneus pour des roues de véhicule, comprenant :
une pluralité de paires d'électrodes placées autour d'un axe central (X-X) et angulairement espacées les unes des autres, chaque paire d'électrodes comprenant une électrode radialement interne (19) et une électrode radialement externe (18) ; dans lequel l'électrode radialement interne (19) et l'électrode radialement externe (18) de chaque paire d'électrodes sont sensiblement alignées l'une avec l'autre le long d'une direction radiale ;
dans lequel les paires d'électrodes sont configurées pour loger un pneu (2) entre les électrodes radialement externes (18) et les électrodes radialement internes (19), dans lequel un axe de rotation (X'-X') du pneu (2) est placé à l'axe central (X-X) ;
au moins un dispositif (23), pour obtenir des valeurs de résistance électrique, fonctionnellement connecté aux paires d'électrodes et configuré, une fois que ledit pneu (2) est logé entre les électrodes radialement externes (18) et les électrodes radialement internes (19) et son propre axe de rotation (X'-X') est placé à l'axe central (X-X), pour générer une tension entre l'électrode radialement externe (18) et l'électrode radialement interne (19) de chaque paire d'électrodes, et pour obtenir une valeur de résistance électrique entre l'électrode radialement externe (18) et l'électrode radialement interne (19) de chaque paire d'électrodes ;
un cadre de support (16), dans lequel les paires d'électrodes sont montées sur le cadre de support (16), et des dispositifs de déplacement (20, 21) fonctionnellement accouplés aux paires d'électrodes et configurés pour radialement déplacer les électrodes radialement externes (18) et/ou les électrodes radialement internes (19) de toutes les paires d'électrodes.

9. Appareil selon la revendication 8, dans lequel les paires d'électrodes sont angulairement équidistantes les unes des autres.

10. Appareil selon la revendication 8 ou 9, dans lequel les paires d'électrodes sont d'au moins trois.

11. Appareil selon la revendication 8, dans lequel les paires d'électrodes sont déplaçables entre une position ouverte, dans laquelle les électrodes radialement externes (18) de toutes les paires d'électrodes sont espacées les unes des autres et les électrodes radialement internes (19) de toutes les paires d'électrodes sont près les unes des autres, et une position fermée, dans laquelle les électrodes radialement externes (18) de toutes les paires d'électrodes sont près les unes des autres et les électrodes radialement internes (19) de toutes les paires d'électrodes sont espacées les unes des autres.

12. Appareil selon l'une des revendications précédentes 8 à 11, dans lequel les dispositifs de déplacement (20, 21) comprennent un premier mécanisme de synchronisation connecté à toutes les électrodes radialement externes (18), pour les déplacer de façon synchrone les unes à l'opposé des autres ou en rapprochement mutuel, un second mécanisme de synchronisation connecté à toutes les électrodes radialement internes (19), pour les déplacer de façon synchrone les unes à l'opposé des autres ou en rapprochement mutuel.

13. Appareil selon l'une des revendications 8 à 12, dans lequel chacune des électrodes radialement internes (19) et chacune des électrodes radialement externes (18) comprend une barre sensiblement parallèle à l'axe central (X-X).

14. Appareil selon l'une des revendications 8 à 13, comprenant : un dispositif unique (23), pour obtenir des valeurs de résistance électrique, fonctionnellement connecté à toutes les paires d'électrodes ; un circuit électrique (24) fonctionnellement couplé à l'un dispositif unique (23), pour obtenir des valeurs de résistance électrique, et à toutes les paires d'électrodes et configuré pour générer la tension et pour obtenir ladite valeur de résistance électrique entre une paire d'électrodes à la fois.

15. Appareil selon l'une des revendications 8 à 13, comprenant une pluralité de dispositifs (23) pour obtenir des valeurs de résistance électrique, chacun fonctionnellement connecté à une paire respective d'électrodes.
